# FASCICULE DE BREVET EUROPEEN

(11) **EP 1 816 027 B1**
(45) Date de publication et mention de la délivrance du brevet: **15.08.2012**
(21) Numéro de dépôt: 07290152.3
(22) Date de dépôt: 06.02.2007
(51) Int. Cl.: B60N 2/48

(54) **Dispositif d'assemblage d'appui-tête à tige courbée dans une gaine rectiligne**
Vorrichtung zur Montage einer Kopfstütze mit gebogener Stange in einer geradlinigen Umhüllung
Headrest assembly device with a curved rod in a rectilinear casing

(30) Priorité: 06.02.2006 FR 0601054
(43) Date de publication de la demande: 08.08.2007
(73) Titulaire: Centre d'Etude et de Recherche pour l'Automobile (CERA), 51100 Reims (FR)
(72) Inventeur: Dehondt, Thierry, 51430 Tinqueux (FR)
(74) Mandataire: Sayettat, Julien Christian

(56) Documents cités:
- EP-A1- 0 582 765
- DE-A1- 19 730 616
- DE-A1- 19 945 585
- FR-A1- 2 823 808
- US-A- 3 635 527
- US-A1- 2005 012 374
- US-B1- 6 361 112

## Description

L'invention concerne un dispositif d'assemblage d'un appui-tête sur un dossier de siège de véhicule automobile et une gaine d'un tel dispositif.

Il est connu de réaliser un dispositif d'assemblage d'un appui-tête sur un dossier de siège de véhicule automobile, ledit dispositif comprenant une tige rectiligne de section circulaire, issue notamment dudit appui-tête, et une gaine, comprise notamment dans ledit dossier, ladite gaine comprenant un conduit rectiligne débouchant de section analogue à celle de ladite tige de sorte à recevoir ladite tige, dans lequel ladite tige est en contact serrant contre ledit conduit au moyen d'un organe élastique, tel qu'un ressort, ledit organe élastique permettant de maintenir ladite tige en compression contre ladite gaine.

Un tel agencement permet d'éviter d'avoir un jeu entre la gaine et la tige, susceptible de générer des bruits parasites et préjudiciable en termes de qualité perçue par l'utilisateur.

Bien que permettant de répondre au problème posé, un tel agencement présente néanmoins l'inconvénient d'être complexe et coûteux, ceci du fait de la présence de l'organe élastique qui doit être réalisé et monté sur la gaine.

On connait également du document DE 199 45 585 un dispositif selon le préambule de la revendication 1.

L'invention a pour but de proposer un dispositif d'assemblage d'un appui-tête sur un dossier de siège de véhicule automobile de conception simplifiée.

A cet effet, et selon un premier aspect, l'invention propose un dispositif d'assemblage d'un appui-tête sur un dossier de siège de véhicule automobile selon la revendication 1.

De la sorte, l'organe élastique est supprimé, le contact serrant étant obtenu en jouant simplement sur les géométries respectives de la tige et du conduit de sorte à créer un appui de type « trois points » d'un élément courbe, à savoir la tige, introduit dans un conduit rectiligne.

Un tel contact serrant permet notamment, lorsque l'appui-tête est réglable en hauteur, un coulissement sous effort contrôlé de la tige dans la gaine.

Dans la suite de cette description, les termes de positionnement dans l'espace (vertical, longitudinal, transversal,...) sont pris en référence au dispositif disposé dans le véhicule.

Selon un deuxième aspect, l'invention propose une gaine d'un tel dispositif.

D'autres particularités et avantages de l'invention apparaîtront dans la description qui suit, faite en référence aux figures jointes dans lesquelles :
- la figure 1 est une représentation schématique en coupe longitudinale d'un dispositif selon un mode de réalisation de l'invention,
- la figure 2 est une vue schématique de face, selon une réalisation particulière, d'un appui-tête destiné à être assemblé par un dispositif selon l'invention,
- la figure 3 est une vue schématique en perspective d'une gaine utilisée dans un dispositif selon l'invention, ladite gaine étant réalisée selon un mode particulier de réalisation.

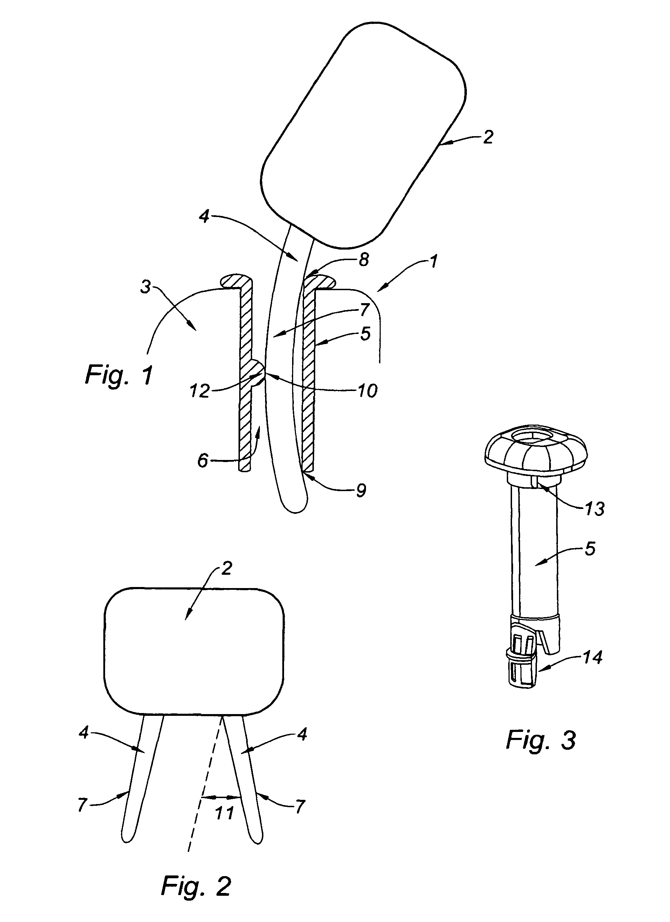

En référence à la figure 1, on décrit à présent un dispositif 1 d'assemblage d'un appui-tête 2 sur un dossier 3 de siège de véhicule automobile, ledit dispositif comprenant une tige 4 de section circulaire et une gaine 5, ladite gaine comprenant un conduit 6 rectiligne débouchant de section analogue à celle de ladite tige de sorte à recevoir ladite tige, la portion 7 de ladite tige disposée dans ledit conduit présentant une courbure dans sa longueur, ladite courbure étant agencé en combinaison avec la longueur dudit conduit de sorte que ladite tige soit en contact serrant contre ledit conduit.

En variante non représentée, la tige 4 peut être issue du dossier 3 et la gaine 5 être comprise dans l'appui tête 2.

Selon la réalisation représentée, la courbure de la tige 4 est inscrite dans un plan vertical longitudinal.

Selon la réalisation représentée, la tige 4 est notamment en contact serrant sur trois zones sensiblement ponctuelles d'extrémités 8,9 et médiane 10 du conduit 6, un tel appui « trois points » permettant d'assurer l'absence de jeu entre ladite tige et la gaine 5, ladite tige étant introduite en force dans ladite gaine.

Selon la réalisation représentée, le conduit 6 comprend un ergot 12 interne, notamment issu de matière lorsque la gaine 5 est à base de matière plastique injectée, contre lequel est disposée la tige 4 en contact serrant, la zone médiane 10 étant au niveau dudit ergot. La présence d'un tel ergot 12 permet d'optimiser le rattrapage de jeu recherché, ledit ergot pouvant, par déformation plastique, absorber les écarts dimensionnels pouvant exister d'une gaine 5 à l'autre.

L'ergot 12 interne est situé, dans la réalisation représentée, sensiblement en partie médiane du conduit 6.

La gaine 5 selon la réalisation de la figure 3 est destinée à être insérée dans une douille solidaire du dossier 3 de siège, ladite gaine comprenant au moins une saillie 13 supérieure externe agencée pour assurer, après son rabotage lors de l'introduction de ladite gaine dans ladite douille, un contact serrant entre les parties supérieures de ladite gaine et de ladite douille.

En outre, la gaine 5 comprend au moins une languette inférieure 14 agencée pour être mise en contrainte contre la douille une fois ladite gaine disposée dans ladite douille.

Ces deux agencements particuliers de la gaine 5 contribuent à optimiser la suppression des bruits parasites de vibration, du fait de la mise en appui de ladite gaine contre la douille.

Une gaine 5 d'un dispositif 1, selon la réalisation représentée, comprend un conduit 6 rectiligne débouchant de section circulaire, ledit conduit comprenant un ergot 12 interne.

De façon non représentée, la gaine 5 peut comprendre un système de blocage réversible de la tige 4 en translation, par exemple sous forme d'un tiroir pouvant s'engager dans des crans prévus sur ladite tige, ceci de sorte à permettre un réglage en hauteur de l'appui-tête 2.

Selon une réalisation particulière représentée en figure 2, afin d'optimiser la suppression du jeu entre la tige 4 et la gaine 5, un appui-tête 2 de véhicule automobile peut comprendre deux tiges 4 dont l'une au moins est destinée à être comprise dans un dispositif 1, lesdites tiges étant disposées sensiblement verticalement de part et d'autre dudit appui-tête, lesdites tiges présentant chacune une portion 7 courbe, dont la courbure est non visible sur la figure, les projections desdites tiges sur un plan vertical transversal, dont la figure est une représentation, présentant un écart angulaire 11. De la sorte, les tiges 4 de l'appui-tête 1 sont montées en force dans les gaines 5 par suppression de l'écart angulaire 11, puis relâchées de sorte à se mettre en appui latéral contre lesdites gaines, perpendiculairement à l'appui « trois points » longitudinal, précédemment décrit.

## Revendications

1. Dispositif (1) d'assemblage d'un appui-tête (2) sur un dossier (3) de siège de véhicule automobile, ledit dispositif comprenant une tige (4) de section circulaire et une gaine (5), ladite gaine comprenant un conduit (6) rectiligne débouchant de section analogue à celle de ladite tige de sorte à recevoir ladite tige,
la portion (7) de ladite tige disposée dans ledit conduit présentant une courbure dans sa longueur, ladite courbure étant agencée en combinaison avec la longueur dudit conduit de sorte que ladite tige soit en contact serrant contre ledit conduit, le dit dispositif étant
**caracterisé en ce que** le conduit (6) comprend un ergot (12) interne contre lequel est disposée la tige (4) en contact serrant.

2. Dispositif (1) selon la revendication 1, **caractérisé en ce que** la courbure de la tige (4) est inscrite dans un plan vertical longitudinal.

3. Dispositif (1) selon la revendication 1 ou 2, la gaine étant destinée à être insérée dans une douille solidaire du dossier (3) de siège, ladite gaine comprenant au moins une saillie (13) supérieure externe agencée pour assurer, après son rabotage lors de l'introduction de ladite gaine dans ladite douille, un contact serrant entre les parties supérieures de ladite gaine et de ladite douille.

4. Dispositif (1) selon l'une quelconque des revendications 1 à 3, la gaine étant destinée à être insérée dans une douille solidaire du dossier (3) de siège, ladite gaine comprenant au moins une languette inférieure (14) agencée pour être mise en contrainte contre ladite douille une fois ladite gaine disposée dans ladite douille.

5. Dispositif (1) selon l'une quelconque des revendication 1 à 4 **caractérisé en ce que** l'ergot (12) interne est situé sensiblement en partie médiane du conduit (6).

6. Gaine (5) d'un dispositif (1) selon l'une quelconque des revendications 1 à 5, ladite gaine comprenant un conduit (6) rectiligne débouchant de section circulaire, ladite gaine étant **caractérisée en ce que** ledit conduit comprend un ergot (12) interne.

## Claims

1. Device (1) for assembling a headrest (2) on a motor vehicle seat backrest (3), said device comprising a rod (4) with a circular cross section and a sheath (5), said sheath comprising an emerging rectilinear conduit (6) with a cross section similar to that of said rod so as to receive said rod, the portion (7) of said rod disposed in said conduit having a curvature in its length, said curvature being arranged in combination with the length of said conduit so that said rod is in tight contact against said conduit, said device being **characterised in that** the conduit (6) comprises an internal lug (12) against which the rod (4) is disposed in tight contact.

2. Device (1) according to claim 1, **characterised in that** the curvature of the rod (4) fits in a longitudinal vertical plane.

3. Device (1) according to claim 1 or 2, the sheath being intended to be inserted in a socket integral with the seat backrest (3), said sheath comprising at least one external upper projection (13) arranged to provide, after shaping thereof when said sheath is introduced into said socket, a tight contact between the top parts of said sheath and said socket.

4. Device (1) according to any one of claims 1 to 3, the sheath being intended to be inserted in a socket integral with the seat backrest (3), said sheath comprising at least one lower tongue (14) arranged so as to be forced against said socket once said sheath is disposed in said socket.

5. Device (1) according to any one of claims 1 to 4, **characterised in that** the internal lug (12) is situated substantially at the middle part of the conduit (6).

6. Sheath (5) of a device (1) according to any one of the claims 1 to 5, said sheath comprising an emerging rectilinear conduit (6) with a circular cross section, said sheath being **characterised in that** said conduit comprises an internal lug (12).

## Patentansprüche

1. Vorrichtung (1) für die Montage einer Kopfstütze (2) auf einer Rückenlehne (3) eines Kraftfahrzeugsitzes, wobei die besagte Vorrichtung einen Stift (4) mit kreisrundem Querschnitt und eine Hülle (5) umfasst, und die besagte Hülle einen durchgehenden geradlinigen Kanal (6) mit einem Querschnitt umfasst, der gleich jenem des besagten Stiftes ist, sodass er den besagten Stift aufnimmt, wobei der Abschnitt (7) des besagten Stiftes, der im besagten Kanal angeordnet ist, in seiner Länge eine Krümmung aufweist, und die besagte Krümmung gemeinsam mit der Länge des besagten Kanals so angeordnet ist, dass der besagte Stift in engem Kontakt mit dem besagten Kanal steht, und die besagte Vorrichtung **dadurch gekennzeichnet ist, dass** der Kanal (6) innen einen Zapfen (12) umfasst, an dem der Stift (4) in engem Kontakt angeordnet ist.

2. Vorrichtung (1) nach Anspruch 1, **dadurch gekennzeichnet, dass** die Krümmung des Stiftes (4) in einer senkrechten Längsebene angeordnet ist.

3. Vorrichtung (1) nach Anspruch 1 oder 2, bei der die Hülle dazu bestimmt ist, in eine fest mit der Rückenlehne (3) des Sitzes verbundene Buchse eingeführt zu werden, wobei die besagte Hülle zumindest einen oberen äußeren Vorsprung (13) umfasst, der angeordnet ist, um nach seinem Abhobeln beim Einführen der besagten Hülle in die besagte Buchse einen engen Kontakt zwischen den oberen Abschnitten der besagten Hülle und der besagten Buchse herzustellen.

4. Vorrichtung (1) nach irgendeinem der Ansprüche 1 bis 3, bei der die Hülle dazu bestimmt ist, in eine fest mit der Rückenlehne (3) des Sitzes verbundene Buchse eingeführt zu werden, wobei die besagte Hülle zumindest eine untere Lasche (14) umfasst, die angeordnet ist, um auf Spannung gegen die besagte Buchse gebracht zu werden, sobald sich die besagte Hülle in der besagten Buchse befindet.

5. Vorrichtung (1) nach irgendeinem der Ansprüche 1 bis 4, **dadurch gekennzeichnet, dass** sich der innere Zapfen (12) in etwa im mittleren Abschnitt des Kanals (6) befindet.

6. Hülle (5) einer Vorrichtung (1) nach irgendeinem der Ansprüche 1 bis 5, umfassend einen durchgehenden geraden Kanal (6) mit kreisrundem Querschnitt, wobei die besagte Hülle **dadurch gekennzeichnet ist, dass** der besagte Kanal innen einen Zapfen (12) umfasst.
